(19) **Europäisches Patentamt**
**European Patent Office**
**Office européen des brevets**

(11) **EP 4 574 860 A1**

(12) **EUROPEAN PATENT APPLICATION**

(43) Date of publication:
**25.06.2025 Bulletin 2025/26**

(21) Application number: **23218179.2**

(22) Date of filing: **19.12.2023**

(51) International Patent Classification (IPC):
***C08G 18/00*** (2006.01)     ***C08G 18/75*** (2006.01)
***C08G 18/76*** (2006.01)     ***C09D 175/04*** (2006.01)

(52) Cooperative Patent Classification (CPC):
**C08G 18/003; C08G 18/755; C08G 18/7671;
C09D 175/04**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Covestro Deutschland AG
51373 Leverkusen (DE)**

(72) Inventors:
• **Latorre Martinez, Irene Cristina
  40764 Langenfeld (DE)**
• **van der Laan, Hans
  4208 BL GORINCHEM (NL)**

• **Becker, Eyleen
  51371 Leverkusen (DE)**
• **Born, Ralph-Georg
  42855 Remscheid (DE)**
• **Banh, Hung
  51371 Leverkusen (DE)**
• **Woods, Laura
  40597 Düsseldorf (DE)**
• **Durgut, Erkan
  44867 Bochum (DE)**

(74) Representative: **Levpat
c/o Covestro AG
Gebäude K12
51365 Leverkusen (DE)**

(54) **USE OF A SOLVENT-FREE COMPOSITION COMPRISING EPOXY-FUNCTIONAL OXAZOLIDINONES FOR PRODUCING ADHESIVES, SEALING COMPOUNDS, POTTING COMPOUNDS, COMPOSITES, SUCH AS FIBER COMPOSITE MATERIALS, OR MOLDINGS, OR FOR PRODUCING COATINGS ON MINERAL, METALLIC OR PLASTIC SUBSTRATES, AND THE PRODUCTS THUS OBTAINED**

(57)     The invention is related to the use of a solvent-free composition C, comprising (A) at least one epoxy-group terminated polyoxazolidinone, derived from a process P comprising the copolymerization of (A1) at least one aliphatic polyepoxide compound with (A2) at least one cycloaliphatic and/or at least one aromatic and/or at least one araliphatic polyisocyanate compound, preferably in the presence of (A3) at least one catalyst, wherein the process is operated at a molar ratio of the epoxy groups of the polyepoxide component (A1) to the isocyanate groups of the polyisocyanate component (A2) of $\geq$ 2:1 to $\leq$ 25:1, furthermore comprising (B) at least one compound having at least one group that is reactive towards terminal epoxy-groups, (C) optionally at least one catalyst and (D) optionally at least one additive, for producing adhesives, sealing compounds, potting compounds, composites, such as fiber composite materials, or moldings, or for producing coatings on mineral, metallic or plastic substrates. The invention is also related to the aforementioned products, obtainable according to the inventive use.

**Description**

The invention is related to the use of a solvent-free composition C, comprising (A) at least one epoxy-group terminated polyoxazolidinone, derived from a process P comprising the copolymerization of (A1) at least one aliphatic polyepoxide compound with (A2) at least one cycloaliphatic and/or at least one aromatic and/or at least one araliphatic polyisocyanate compound, preferably in the presence of (A3) at least one catalyst, wherein the process is operated at a molar ratio of the epoxy groups of the polyepoxide component (A1) to the isocyanate groups of the polyisocyanate component (A2) of ≥ 2:1 to ≤ 25:1, furthermore comprising (B) at least one compound having at least one group that is reactive towards terminal epoxy-groups, (C) optionally at least one catalyst and (D) optionally at least one additive, for producing adhesives, sealing compounds, potting compounds, composites, such as fiber composite materials, or moldings, or for producing coatings on mineral, metallic or plastic substrates. The invention is also related to the aforementioned products, obtainable according to the inventive use.

The use of coating compositions based on epoxy-group terminated polyoxazolidinones for producing anti-corrosive coatings or protective can or coil coatings is known from WO 2022/122606 A1. The compositions are solvent-based and contain a minimum amount of solvents of 5 % by weight, based on the total weight of the polyoxazolidinones, the crosslinkers and the solvents (claim 1 and page 11, paragraph 6).

The European patent application with the number 23164709.0 also discloses coating compositions based on epoxy-group terminated polyoxazolidinone and their use for producing coatings. No information is provided on the field of use of these coatings.

It was an object of the present invention to provide compositions based on epoxy-functional oxazolidinones, which have a high environmental compatibility and result in products with good solvent resistance and high flexibility.

Surprisingly, it has been found, that the above objects can be achieved by the use of a solvent-free composition C, comprising

(A) at least one epoxy-group terminated polyoxazolidinone, derived from a process P comprising the copolymerization of

(A1) at least one aliphatic polyepoxide compound with
(A2) at least one cycloaliphatic and/or at least one aromatic and/or at least one araliphatic polyisocyanate compound, which optionally is blocked with at least one blocking agent,
preferably in the presence of
(A3) at least one catalyst,
at a molar ratio of the epoxy groups of the polyepoxide component (A1) to the isocyanate groups of the polyisocyanate component (A2) of ≥ 2:1 to ≤ 25:1,

(B) at least one compound having at least one group that is reactive towards terminal epoxy-groups,
(C) optionally at least one catalyst and
(D) optionally at least one additive,

for producing adhesives, sealing compounds, potting compounds, composites, such as fiber composite materials, or moldings, or for producing coatings on mineral, metallic or plastic substrates.

According to the invention a solvent-free composition C is used, wherein the at least one epoxy-group terminated polyoxazolidinone (A), used in composition C, is derived from a special process, wherein the polyepoxide component (A1) is reacted with the polyisocyanate component (A2) at a high excess of epoxide groups towards isocyanate groups. This process leads to low viscous polyepoxides, which serve as a kind of (reactive) diluent for the cross-linker/s (B), what makes the addition of a solvent in composition C superfluous. Since the compositions are solvent-free they have a high environmental compatibility.

"Solvent-free" in the context of the present invention is understood to mean that no solvents are added to components (A) and (B) in the inventive use, meaning that components (A) and (B) are reacted with one another in undissolved form. However, component (A) may contain minor amounts of solvents. This is the case, for example, when component (A3) is used in dissolved form in process P or when a solvent is used in process P and minor amounts of the solvent remain in the resulting product despite purification. Moreover, components (C) and (D) can be dissolved in minor amounts of a solvent/solvents before added to composition C. In the context of the present invention composition C is considered "solvent-free" when the solvent content is less than 5 % by weight (≥ 0 to < 5 % by weight), preferably at most 1 % by weight (≥ 0 to ≤ 1 % by weight), more preferably at most 0.1 % by weight (≥ 0 to ≤ 0.1 % by weight), even more preferably at most 0.01 % by weight (≥ 0 to ≤ 0.01 % by weight) and most preferably 0 % by weight, based on the total weight of the reaction mixture (i.e. components (A) to (D) and the solvent/s.)

A solvent is understood to mean a substance which at least one of components (A), (A1), (A2), (A3), (B), (C), and (D) can dissolve, but which does not react with any of these components.

As used herein, the term "polyoxazolidinone" is meant to denote compounds containing at least two oxazolidinone groups in the molecule. The term "epoxy-group terminated" polyoxazolidinone is related to polyoxazolidinone compounds, wherein the molar ratio of the epoxy groups of the polyepoxide component (A1) to the isocyanate groups of the polyisocyanate component (A2) is $\geq 2:1$ to $\leq 25:1$, resulting in no terminal isocyanate groups being present within the polyoxazolidinone compound used according to the present invention.

The composition used according to the present invention comprises or consists of components (A), (B), optionally (C) and optionally (D), which are explained in detail in the following.

Component (A):

The composition C used according to the present invention comprises at least one epoxy-group terminated polyoxazolidinone, derived from (A1) at least one aliphatic polyepoxide compound and (A2) at least one cycloaliphatic and/or at least one aromatic and/or at least one araliphatic polyisocyanate compound, which are copolymerized preferably in the presence of (A3) at least one catalyst.

As used herein, the term "polyepoxide compound" is meant to denote compounds having two or more epoxide groups.

According to the present invention, at least one aliphatic polyepoxide compound (A1) is used. As used herein, the term "aliphatic polyepoxide compound" is meant to denote compounds having two or more epoxide groups and contains only aliphatic linear or branched and/or cycloaliphatic moieties.

In a preferred embodiment of the invention, the at least one aliphatic polyepoxide compound is at least one compound selected from the group consisting of neopentyl glycol diglycidyl ether, hydrogenated bisphenol A diglycidyl ether, 1,4-cyclohexane dicarboxylic acid diglycidyl ester, ethylene glycol diglycidyl ether, polyethylene glycol diglycidyl ether, diethylene glycol diglycidyl ether, propylene glycol diglycidyl ether, dipropylene glycol diglycidyl ether, polypropylene glycol diglycidyl ether, glycerol triglycidyl ether, polyglycerol polyglycidyl ether, polyglycidyl ether of ethoxylated trimethylolpropane, poly(tetramethylene-oxide) diglycidyl ether, pentaerythritol polyglycidyl ether, vinylcyclohexene diepoxide, the diepoxides of double unsaturated fatty acid C1 to C18 alkyl esters, polyepoxides of double unsaturated ethoxylated fatty alcohols, aliphatic di- or polydiglycidyl ether, derived via epoxidation of di- or polyfunctional alcohols with aliphatic linear, aliphatic branched, or cycloaliphatic moieties consisting of 2 to 40 carbon atoms, for example ethanediol diglycidyl ether, propanediol diglycidyl ether, 1,4-butanediol diglycidyl ether, 1,6-hexanediol diglycidyl ether, octanediol diglycidyl ether, trimethylolpropane polyglycidyl ether, glycerol polyethylene triglycidyl ether, 2-ethyl hexyl diglycidyl ether, isosorbide diglycidyl ether.

In a more preferred embodiment of the invention, the at least one aliphatic polyepoxide compound is at least one compound selected from the group consisting of hydrogenated bisphenol A diglycidyl ether, polyethylene glycol diglycidyl ether, polypropylene glycol diglycidyl ether, glycerol triglycidyl ether, polyglycidyl ether of ethoxylated trimethylolpropane, poly(tetramethylene-oxid) diglycidyl ether, pentaerythritol polyglycidyl ether, the diepoxides of double unsaturated fatty acid C1 to C18 alkyl esters, aliphatic di- or polydiglycidyl ether, derived via epoxidation of di- or polyfunctional alcohols with aliphatic linear, aliphatic branched, or cycloaliphatic moieties consisting of 2-40 carbon atoms, for example ethanediol diglycidyl ether, 1,4-butanediol diglycidyl ether, 1,6-hexanediol diglycidyl ether, trimethylolpropane polyglycidyl ether, glycerol polyethylene triglycidyl ether, 2-ethyl hexyl diglycidyl ether, isosorbide diglycidyl ether.

Most preferred the at least one aliphatic polyepoxide compound is at least one compound selected from the group consisting of ethanediol diglycidyl ether, butanediol diglycidyl ether, hexane diol diglycidyl ether, trimethylolpropane triglycidyl ether.

A mixture of two or more of the aforementioned aliphatic polyepoxide compounds can also be used.

As used herein, the term "polyisocyanate compound" is meant to denote compounds having two or more isocyanate groups.

In an embodiment of the method according to the invention, the polyisocyanate component (A2) is at least one cycloaliphatic and/or at least one aromatic and/or at least one araliphatic polyisocyanate compound.

As used herein, the term "cycloaliphatic polyisocyanate compound" is meant to denote compounds having two or more isocyanate groups and cycloaliphatic moieties.

As used herein, the term "aromatic polyisocyanate compound" is meant to denote compounds having two or more isocyanate groups and aromatic moieties.

As used herein, the term "araliphatic polyisocyanate compound" is meant to denote compounds having two or more isocyanate groups and araliphatic moieties.

The polyisocyanate compounds and their preparation are in general known to the skilled artisan, for example by phosgenation in the liquid or gas phase or by a phosgene-free route, for example by thermal urethane cleavage.

In an embodiment of the method according to the invention, the polyisocyanate compound is at least one compound selected from the group consisting of polyisocyanates having preferably a molecular weight of 140 to 600 g/mol having cycloaliphatically, aromatically or araliphatically bonded isocyanate groups, examples being 1,3- and 1,4-diisocyanatocyclohexane, 1,3- and 1,4-bis(isocyanatomethyl)cyclohexane, 1-isocyanato-3,3,5-trimethyl-5-isocyanatomethylcyclohexane (isophorone diisocyanate, IPDI), 2,4'- and 4,4'-diisocyanatodicyclohexylmethane (H12-MDI), 4,4'-diisocyanato-2,2-dicyclohexyl propane, 1-isocyanato-1-methyl-4(3)isocyanatomethylcyclohexane, bis(isocyanatomethyl)norbomane, 1,3- and 1,4-bis(isocyanatomethyl)benzene (xylylene diisocyanate, XDI), 1,3- and 1,4-bis(2-isocyanatopropan-2-yl)benzene (tetramethylxylylene diisocyanate, TMXDI), 1,3-bis(isocyanatomethyl)-4-methylbenzene, 1,3-bis(isocyanatomethyl)-4-ethylbenzene, 1,3-bis(isocyanatomethyl)-5-methylbenzene, 1,3-bis(iscyanatomethyl)-2,4,6-trimethlybenzene, 1,3-bis(isocyanatomethyl)-4,5-dimethylbenzene, 1,4-bis(isocyanatomethyl)-2,5-dimethylbenzene, 1,4-bis(isocyanatomethyl)-2,3,5,6-tetramethylbenzene, 1,3-bis(isocyanatomethyl)-5-tert-butylbenzene, 1,3-bis(isocyanatomethyl)-4-chlorobenzene, 1,3-bis(isocyanatomethyl)-4,5-dichlorobenzene, 1,3-bis(isocyanatomethyl)-2,4,5,6-tetrachlorobenzene, 1,4-bis(isocyanatomethyl)-2,3,5,6-tetrachlorobenzene, 1,4-bis(isocyanatomethyl)-2,3,5,6-tetrabromobenzene, 1,4-bis(2-isocyanatoethyl)benzene and 1,4-bis(isocyanatomethyl)naphthalene, 1,2-, 1,3- and 1,4-diisocyanatobenzene (phenylene diisocyanate), 2,4- and 2,6-diisocyanatotoluene (toluene diisocyanate, TDI), 2,3,5,6-tetramethyl-1,4-diisocyanatobenzene, the isomeric diethylphenylene diisocyanates, diisopropylphenylene diisocyanates, diisododecylphenylene diisocyanates and biphenyl diisocyanates, 3,3'-dimethoxybiphenyl-4,4'-diisocyanate, 2,2'-, 2,4'- and 4,4'-diisocyanatodiphenylmethane (MDI), 3,3'-dimethyl diphenylmethane-4,4'-diisocyanate, 4,4'-diisocyanatodiphenylethane, 1,5-diisocyanatonaphthalene (NDI), diphenylether diisocyanate, ethylene glycol diphenylether diisocyanate, diethylene glycol diphenylether diisocyanate, 1,3-propylene glycol diphenylether diisocyanate, benzophenone diisocyanate, triisocyanatobenzene, 2,4,6-triisocyanatotoluene, trimethylbenzene triisocyanate, diphenylmethane-2,4,4'-triisocyanate, 3-methyldiphenylmethane-4,6,4'-triisocyanate, the isomeric naphthalene triisocyanates and methylnaphthalene diisocyanates, triphenylmethane triisocyanate, 2,4-diisocyanato-1-[(5-isocyanato-2-methylphenyl)methyl]benzene, 4-methyl-diphenylmethane-3,5,2',4',6'-pentaisocyanate, and also the polynuclear homologues of diisocyanatodiphenylmethane known as "polymer-MDI", any polyisocyanates having uretdione, isocyanurate, urethane, allophanate, biuret, iminooxadiazinedione and/or oxadiazinetrione structure, prepared by modification of simple cycloaliphatic, aromatic or araliphatic diisocyanates, for example those of the type mentioned above, obtainable by any known methods, described for example in J. Prakt. Chem. 336 (1994) 185 - 200, in DE-A 1 670 666, DE-A 1 954 093, DE-A 2 414 413, DE-A 2 452 532, DE-A 2 641 380, DE-A 3 700 209, DE-A 3 900 053 and DE-A 3 928 503 or in EP-A 0 336 205, EP-A 0 339 396 and EP-A 0 798 299, DE-A 870 400, DE-A 953 012, DE-A 1 090 196, EP-A 0 546 399, CN 105218780, CN 103881050, CN 101717571, US 3 183 112, EP-A 0 416 338, EP-A 0 751 163, EP-A 1 378 529, EP-A 1 378 530, EP-A 2 174 967, JP 63260915 or JP 56059828.

According to the present invention, a mixture of two or more of the aforementioned polyisocyanate compounds can also be used.

Particularly preferred, the at least one polyisocyanate compound is at least one compound selected from the group consisting of 1-isocyanato-3,3,5-trimethyl-5-isocyanatomethylcyclohexane (isophorone diisocyanate, IPDI), 2,4'- and 4,4'-diisocyanatodicyclohexylmethane (H12-MDI), 2,2'-, 2,4'- and 4,4'-diisocyanatodiphenylmethane (MDI), the polynuclear homologues of diisocyanatodiphenylmethane, known as "polymer-MDI", 2,4- and 2,6-diisocyanatotoluene (toluene diisocyanate, TDI), 1,3- and 1,4-bis(isocyanatomethyl)benzene (xylylene diisocyanate, XDI), 1,3- and 1,4-bis(2-isocyanatopropan-2-yl)benzene (tetramethylxylylene diisocyanate, TMXDI), 3,3'-dimethyl diphenylmethane-4,4'-diisocyanate, 4,4'-diisocyanatodiphenylethane, 1,5-diisocyanatonaphthalene (NDI) and mixtures thereof.

The polyisocyanates may be blocked with one or more suitable blocking agents.

Suitable blocking agents are, for example, alcohols, lactams, oximes, malonic esters, alkyl acetoacetates, triazoles, imidazoles, pyrazoles and amines such as butanone oxime, diisopropylamine, 1,2,4-triazole, dimethyl-1,2,4-triazole, imidazole, diethyl malonate, acetoacetic ester, acetone oxime, 3,5-dimethylpyrazole, $\varepsilon$-caprolactam, N-methyl, N-ethyl, N-(iso)propyl, N-n-butyl, N-iso-butyl, N-tert-Butyl-benzylamine or 1,1-dimethylbenzylamine, N-alkyl-N-1,1-dimethylmethylphenylamine, adducts of benzylamine to compounds with activated double bonds such as malonic esters, N,N-dimethylaminopropylbenzylamine and other tertiary amino groups containing optionally substituted benzylamines and/or dibenzylamine be.

Further suitable blocking agents are, for example, hydrocarbon resins containing phenolic OH groups and optionally substituted phenols. Suitable optionally substituted phenols are, in particular, $C_1$-$C_{18}$-alkyl phenols, and more particularly $C_6$-$C_{12}$-alkyl phenols, wherein the alkyl radical can be linear, branched or cyclic. Isomer mixtures of various alkyl phenols can of course also be used. Examples are phenol, cresol and its isomers, xylenol and its isomers, 2-tert.-butyl phenol, 4-tert-butylphenol, nonylphenol and its optionally branched isomers (technical isononyl phenol), cashew nutshell products at least containing cardanol and/or cardol, as described e.g., in WO 2021/204741 A1. Other examples of substituted phenols are hydroxybenzoic acid alkyl esters in which the ester group is preferably a $C_1$-$C_4$-alkyl radical. Phenolic hydrocarbon resins containing OH groups that can be used for the blocking of the polyisocyanates are known in principle and are described for example in Ullmann's Encyklopädie der technischen Chemie, 4th Edition, Vol. 12, pp. 539 to 545 (Verlag Chemie, Weinheim 1976), Kirk-Othmer, Encyclopedia of Chemical Technology, 3rd Edition, Vol. 12, pp. 852 to 869, (John Wiley & Sons, New York 1980) or Encyclopedia of Polymer Science and Engineering, Vol. 7, pp. 758 to 782 (John Wiley & Sons, New York 1987). Examples of suitable hydrocarbon resins containing phenolic OH groups are coumarone-indene resins, petroleum resins or terpene resins. Such hydrocarbon resins containing phenolic OH groups are typically produced by copolymerisation of unsaturated hydrocarbons of the aforementioned type with phenol and/or alkylated phenols such as cresols in the presence of strong acids or catalysts of the Friedel-Crafts type. Suitable unsaturated hydrocarbons for the production of the OH-functional hydrocarbon resins that may be used according to the invention are those hydrocarbons obtained in the cracking of naphtha or gas oil, such as for example butene, butadiene, pentene, piperylene, isoprene, cyclopentadiene, styrene, $\alpha$-methylstyrene, vinyltoluene, dicyclopentadiene, methyldi-cyclopentadiene, indene or methylindene. Also suitable as unsaturated hydrocarbons are terpene resins such as for example $\alpha$-pinene, $\beta$-pinene, dipentene, D-limonene or terpentine.

Further suitable blocking agents are, for example, CH-acidic cyclic ketones having an electron-withdrawing group in ortho-position to the keto group, such as an ester group, a sulfoxide group, a sulfone group, a nitro group, a phosphonate group, a nitrile group, an isonitrile group or a carbonyl groups. Such cyclic ketones are, for example, cyclopentanone-2-carboxymethyl ester and carboxyethyl ester, cyclopentanone-2-carboxylic acid nitrile, cyclohexanone-2-carboxymethyl ester and carboxyethyl ester or cyclopentanone-2-carbonylmethane.

Mixtures of the aforementioned blocking agents can also be used.

Component (A) of the composition according to the present invention is obtained by the reaction of at least one epoxy-group terminated polyoxazolidinone, derived from (A1) at least one aliphatic polyepoxide compound and (A2) at least one cycloaliphatic and/or at least one aromatic and/or at least one araliphatic polyisocyanate compound, both as outlined above.

In a preferred embodiment of the invention component (A) is the product of at least one cycloaliphatic polyisocyanate compound and at least one aliphatic polyepoxide compound.

In a further preferred embodiment of the invention component (A) is the product of at least one aromatic polyisocyanate compound and at least one aliphatic polyepoxide compound.

In general, the reaction between the at least one polyisocyanate compound and the at least one aliphatic polyepoxide compound can be conducted by any methods known to the skilled artisan.

In a preferred embodiment of the invention, the molar ratio of the epoxy groups of the polyepoxide component (A1) to the isocyanate groups of the polyisocyanate component (A2) is $\geq 2{,}5{:}1$ to $\leq 25{:}1$, particularly preferably $\geq 3{:}1$ to $\leq 25{:}1$, more preferably $\geq 3{,}5{:}1$ to $\leq 25{:}1$, further preferred $\geq 3{,}5{:}1$ to $\leq 10{:}1$, more preferred $\geq 3{,}5{:}1$ to $\leq 5{:}1$, even more preferred $\geq 3{,}5{:}1$ to $\leq 4{,}5{:}1$.

In a preferred embodiment of the invention the copolymerization of components (A1) and (A2) is operated in the presence of a catalyst (A3).

A preferred process for the preparation of component (A) comprises the steps:

i) Mixing polyisocyanate component (A2), polyepoxide component (A1) and catalyst component (A3) forming a mixture (i);
ii) Copolymerizing the mixture (i).

An alternative process comprises the steps:

iii) Mixing polyepoxide component (A1) and at least a part of catalyst component (A3) forming a mixture (iii);
iv) Addition of polyisocyanate component (A2) to the mixture (iii) at copolymerization conditions.

A further alternative process comprises the steps:

v) Mixing polyisocyanate component (A2) and at least a part of catalyst component (A3) forming a mixture (v);
vi) Addition of polyepoxide component (A1) to the mixture (v) at copolymerization conditions.

Suitable conditions for the copolymerization process are for example a reaction temperature of 130 to 280 °C, preferably 140 to 240 °C, more preferred 155 to 210 °C, most preferred 165 to 195 °C. If temperatures below 130 °C are set, the reaction is generally very slow. At temperatures above 280 °C, the amount of undesirable secondary products increases considerably.

The at least one catalyst (A3) catalyzes the copolymerization of components (A1) and (A2). Catalyst component (A3) is in general at least one compound selected from the group consisting LiCl, LiBr, LiI, $MgCl_2$, $MgBr_2$, $MgI_2$, $SmI_3$, $Ph_4SbBr$, $Ph_4SbCl$, $Ph_4PBr$, $Ph_4PCl$, $Ph_3(C_6H_4\text{-}OCH_3)PBr$, $Ph_3(C_6H_4\text{-}OCH_3)PCl$, $Ph_3(C_6H_4F)PCl$, and $Ph_3(C_6H_4F)PBr$, preferred LiCl, LiBr, LiI and $MgCl_2$.

Catalyst component (A3) is in general present in a molar amount of 0.001 to 4.0 mol-%, preferably in an amount of 0.005 to 1.5 mol-%, more preferred 0.01 to 1.0 mol-%, based on the polyepoxide component (A1).

The catalyst or a solution of the catalyst in a solvent is added in one or several portions so that it is homogeneously dissolved. Preferably the catalysts is added in undissolved form.

The copolymerization can be done in presence or in absence of a solvent. Preferably the copolymerization is operated in the absence of a solvent, which is an advantage since no additional energy-intensive and time consuming solvent removal process, e.g. distillation, is necessary.

According to the present invention, the epoxy-group terminated polyoxazolidinone (A) has preferably an epoxy equivalent weight (EEW) of from 100 to 5000 g/eq, preferably of from 120 to 2000 g/eq, more preferred of from 150 to 800 g/eq, wherein the epoxy equivalent weight was measured with a Metrohm 888 Titrando system. The epoxy sample (0.4-0.7 g) was dissolved in glacial acetic acid (50 mL) in a 250 mL beaker. Subsequently, a solution of tetrabutylammonium bromide (TBAB) in glacial acetic acid (0.2 mol·L$^{-1}$, 25 mL) was added to the dissolved epoxy sample. The solution was titrated with a solution of perchloric acid in glacial acetic acid (0.1 mol·L$^{-1}$) until after the equivalent point.

The at least one epoxy-group terminated polyoxazolidinone (A) is present in composition C in an amount of preferably 10 to 95 % by weight, more preferably 15 to 90 % by weight, particularly preferably 20 to 85 % by weight, in each case in respect of the total weight of components (A) to (C).

The epoxy-group terminated polyoxazolidinone in general has an oxazolidinone weight content of 5 to 50 % by weight, preferably 7 to 45% by weight, particularly preferably 10 to 40 % by weight. This content has been calculated from the amounts of at least one polyisocyanate and at least one epoxide compound that have been used for the preparation of the epoxy-group terminated polyoxazolidinone, wherein the oxazolidinone group has a molecular weight of 86,07 g/mol. These calculated values are based on essentially 100 % conversion. Conversion and selectivity of the reaction towards oxazolidinone are measured and confirmed using analytical methods known to the skilled artisan such as IR (infrared spectroscopy) and/or 13C-NMR spectroscopy.

Component (B):

The composition C used according to the present invention comprises a component (B) which is at least one compound having at least one functional group that is reactive towards terminal epoxy-groups.

In general, component (B) can be any compound which comprises at least one functional group which is reactive towards the terminal epoxy-groups of component (A).

Component (B) which is present in the composition used according to the present invention is a hardener, i.e., a curing agent or crosslinker, or curing agent blend. Generally, any hardener known in the art which is appropriate for curing epoxy resins may be used. The hardener of choice may depend on the application requirements.

Preferably, component (B) is preferably selected form the group consisting of dicyandiamides, substituted guanidines, phenolic compounds, amines, benzoxazines, anhydrides, amido amines, polyamides, polyamines, polyesters, polyisocyanates, polymercaptans, urea formaldehyde, melamine formaldehyde resins and mixtures thereof.

For example, in one embodiment, component (B) is at least one anhydride or a mixture comprising at least one anhydride group. Examples of corresponding preferred components (B) are selected from the group consisting of phthalic acid anhydride and derivatives, nadic acid anhydride and derivatives, trimellitic acid anhydride and derivatives, pyromellitic acid anhydride and derivatives, benzophenonetetracarboxylic acid anhydride and derivatives, dodecenylsuccinic acid anhydride and derivatives, poly(ethyloctadecanedioic acid)anhydride and derivatives, and mixtures thereof.

In one embodiment, component (B) is at least one amine. Preferred amines are linear or branched aliphatic, cycloaliphatic, araliphatic or aromatic amines, such as ethanolamine, ethyleneamine, propyleneamine, hexamethylenediamine, methylpentamethylenediamine, trimethylhexanediamine, isophorondiamine, diaminocyclohexane, ethylenediamine, diethylenetriamine (DETA), triethyleneaminetetramine (TETA), Tris(dimethylaminomethyl)phenol, I-(o-tolyl)-biguanide, methylenedianiline (MDA), toluenediamine (TDA), diethyltoluenediamine (DETDA) or diaminodiphenylsulfone (DADS), polyetheramine, morpholine, alkylalcoholamine, methyl ethanolamine, aminopropylamine, dicyandiamide, amine-terminated polyols and polyamino adducts, such as epoxy-amine-adducts, for example the ones commercially available from LEUNA Harze GmbH (Germany) under the tradename Epilox® M (e.g. Epilox® M 1189).

Mercaptans, in particular mercaptan-terminated polysulfide polymers or mixtures thereof, can also be used as component (B).

A further preferred group of compounds used as component (B) in the composition according to the present invention are phenol formaldehyde compounds, including, but not limited to, reaction products of aldehydes with phenols. Examples of aldehydes include, but are not limited to, formaldehyde and acetaldehyde. Various phenols can be used such as, but not limited to, phenol, cresol, p-phenylphenol, p-tert-butylphenol, p-tert-amylphenol, cyclopentylphenol, cresylic acid, bisphenol-A, bisphenol-F and combinations thereof. Examples of commercially available phenol formaldehyde crosslinkers such as Aradur® 949-2, available from HUNTSMANN, and PHENODUR™ PR 612, available from CYTEC Industries, among others. Also, acid functional phenols could be used in making phenol formaldehyde resins. Corresponding components (B) can be unetherified or etherified with alcohols or polyols.

According to a particularly preferred embodiment of the present invention, the at least one compound comprising at least one functional group that is reactive towards terminal epoxy-groups in component (B) is selected from the group consisting of anhydrides, phenol formaldehyde compounds, amines, benzoxazines, amido amines, polyamides, polyamines and mixtures thereof.

The at least one compound having at least one functional group that is reactive towards terminal epoxy-groups (component (B)) is present in the composition in an amount of preferably 5 to 90 % by weight, more preferably 10 to 85 % by weight, particularly preferably 15 to 80 % by weight, in each case in respect of the total weight of components (A) to (C) .

According to a preferred embodiment of the present invention, the weight ratio of epoxy groups of the component (A) to the functional groups that are reactive towards terminal epoxy-groups in component (B) is from 50:50 to 95:5; preferably from 60:40 to 90:10 more preferably from 65:35 to 85:15.

Component (C):

Optionally and beside components (A) and (B), the composition according to the present invention can comprise at least one catalyst as component (C). These catalysts are crosslinking catalysts, for example inorganic and organic salts and complexes of tin, lead, antimony, bismuth, iron or manganese, preferably organic salts and complexes of bismuth and tin, in particular bismuth lactate, ethylhexanoate or dimethyolpropionate, dibutyltin oxide or dibutyltin dilaurate. If component (C) is present in composition C it is present in an amount of > 0 to ≤ 10 % by weight, more preferably ≥ 0.05 to ≤ 10 % by weight, more preferably 0.1-7 % by weight, most preferably 0.2-5 % by weight, in each case with respect to the total weight of components (A) to (C).

Preferably composition C does not contain catalyst component (C).

Component (D):

Optionally and beside components (A) and (B) and optional component (C), the composition according to the present invention can comprise at least one additive as component (D). Examples of such additives are residue-free or essentially residue-free thermally decomposable salts, binders which are preferably curable physically, thermally and/or with actinic radiation, crosslinking agents, thermally curable reactive thinners (e.g. the commercial available reactive thinner Epilox® T-19/34-700 available from LEUNA-Harze GmbH, Germany), reactive diluents curable with actinic radiation, coloring and/or effect pigments, transparent pigments, fillers, molecularly dispersible dyes, nanoparticles, light stabilizers, antioxidants, deaerators, emulsifiers, slip additives, polymerization inhibitors, radical polymerization initiators, thermolabile free radical initiators, adhesion promoters, leveling agents, film-forming aids, for example thickeners and shear thinning sag control agents (SCA), flame retardants, corrosion inhibitors, flow aids, desiccants, biocides, matting agents, organic pigments, inorganic pigments, for example zinc oxide, carbon black, or titanium dioxide anti-corrosion pigments, fillers, for example calcium sulfate, barium sulfate, silicates, for example talc, bentonite, kaolin, silicas, oxides, for example aluminum hydroxide, magnesium hydroxide, nanoparticles, organic fillers, for example textile fibers, cellulose fibers, polyethylene fibers, wood flour, titanium dioxide, carbon black, iron oxide, zinc phosphate, lead silicate, radical scavenger, organic corrosion inhibitors, polymerization inhibitors, defoamers, emulsifiers, for example non-ionic emulsifiers such as alkoxylated alkanols and polyols, phenols and alkylphenols or anionic emulsifiers such as alkali salts or ammonium salts of alkane carboxylic acids, alkane sulfonic acids, and sulfonic acids of alkoxylated alkanols and polyols, phenols and alkylphenols, wetting agents, for example siloxanes, fluorine-containing compounds, carboxylic acid half-esters, phosphoric acid esters, polyacrylic acids and their copolymers or polyurethanes, adhesion promoter, flow aids, film-forming aids, for example cellulose derivatives, flame retardants, low molecular weight, oligomeric and high molecular weight reactive diluents which can participate in the thermal crosslinking, for example polyols such as tricyclodecanedimethanol, dendrimeric polyols, hyperbranched polyesters, polyols based on metathesis oligomers or branched alkanes with more than eight carbon atoms in the molecule, anti-cratering agent, water-miscible or dispersible organic solvents, rheology-controlling additives, cross-linked polymeric microparticles, inorganic layered silicates, preferably smectites, in particular montmorillonites and hectorites, such as aluminum-magnesium silicates, sodium-magnesium and sodium-magnesium-fluorine-lithium layered silicates of the montmorillonite type or inorganic layered silicates such as aluminum-magnesium-silicates, sodium-magnesium and montmorillonite type sodium magnesium fluorine lithium layered silicates, silicas such as aerosils, synthetic polymers with ionic and/or associative groups, for example polyvinyl alcohol, poly(meth)acrylamide, poly(meth)acrylic acid, polyvinyl pyrrolidone, styrene-maleic anhydride or ethylene-maleic anhydride copolymers and their derivatives or hydrophobically modified polyacrylates, associative polyurethane-based thickeners, catalysts, for example a hydrophobic sulfonic acid catalyst based on dinonylnaphthalene disulfonic acid, preferably supplied as a solution in isobutanol (Nacure 155), alcohols, for example butanol or hexanol, stabilizers, for example phosphoric acid, and mixtures thereof. Suitable additives of the type mentioned above are, for example, known from German patent application DE 199 48 004 A1, German patent application DE 199 14 98 A1, German patent DE 100 43 405 C1.

The amount of component (D) differs per application. If Component (D) is present in composition C, it can vary from 0.01 % up to 99 % by weight, more preferably 0.1 % to 95 % by weight, most preferably 0.2 % to 95 % by weight, in each case with respect to the total weight of components (A) to (D).

For example in a primer formulation the amount of component (D) preferably is added in an amount of 0.01 % to 0.3 % by weight, while for a coating the amount of component (D) preferably is limited from 5 % to 70 % by weight, for a self leveling flooring product the amount of component (D) preferably is limited from 20 % to 70 % by weight and for a mortar type of product amount of component (D) preferably is limited from 30 % to 95 % by weight, in each case with respect to the total weight of components (A) to (D).

Components (C) and/or (D) may be present in suitable solvents and be added as a solution to components (A) and (B). Components (C) and (D) preferably do not contain any solvents.

In general, any methods that are known to the skilled artisan can be used in order to prepare the composition C used according to the present invention. Generally speaking, components (A), (B) optionally (C) and optionally (D) are mixed to a solvent-free reactive system, which is composition C. Preferably component (B) is added to component (A). Optional component (C) can be added to component (A) before, during or after the addition of component (B). Optional component (D) can be added to component (A) before, during or after the addition of component (B) or in mixture with component (B).

Preferably the viscosity of the solvent-free composition C is $\leq$ 15000 mPas, more preferably $\leq$ 10000 mPas and most $\leq$ 7000 mPas, determined according to DIN EWN ISO 3219/A.3.

According to the present invention the solvent-free composition C is used for producing adhesives, sealing compounds, potting compounds, composites, such as fiber composite materials, moldings, and coatings.

The reactive systems of the invention can be used on a very wide variety of substrates. Examples include mineral substrates, for example ones made of wood, concrete and/or stone, metallic substrates, for example ones made of iron, steel, copper, brass, bronze, aluminum or titanium, and alloys of the mentioned metals, and plastics, for example in the form of existing coatings on for example the mentioned metallic or mineral substrates.

Possible fields of use are in particular anti-corrosion coatings in hydraulic steel engineering, in shipbuilding (for example ballast tanks) in chalybeate water construction and for pipelines and both aesthetic and protective coatings, such as primers, for example for floors, walls and roofs, sealing or potting compounds, for example for floors, walls and roofs, as mortars or wood repair compounds, especially such that cure at room temperature.

The present invention further relates to adhesives, sealing compounds, potting compounds, composites, such as fiber composite materials, and moldings, as well as to coated mineral, metallic or plastic substrates, obtainable according to the inventive use.

The present invention further relates to a process for producing at least one coating on a mineral, metallic or plastic substrate, wherein the process comprises at least the following steps:

i) applying the solvent-free composition C onto at least a part of the substrate and
ii) curing the applied composition C of step i).

One or more layers of the solvent-free composition C may be applied onto the substrate. In the case more layers are applied, the lower layer can be uncured, partially or fully cured when the upper layer is applied; preferably the lower layer is partially or fully cured when the upper layer is applied.

The substrates may already be completely or partially coated with one or more layers of another coating agent or other coating agents. These coating layers can be uncured, partially or completely cured, when the solvent-free composition C is applied; preferably these coating layers are partially or completely cured, when C is applied. Examples for such coating agents are primers, fillers, base coats, top coats, mid coats.

Moreover, a coating layer or coatings layers of another coating agent or other coating agents may be at least partially applied onto the solvent-free coating composition C, before C is cured or after C is partially or completely cured, preferably after C is partially or completely cured. Such coating agents are for example polyurethane, polyepoxide or polyacrylate coatings.

The solvent-free coating composition C may be applied by various methods, for example via brushing, roller coating, spray coating, for example air-atomized spray, air spray, airless spray, high volume low pressure spray powder coating, dip coating, electrodeposition coating, for example electrostatic bell application, all printing methods like e.g. screen printing, letter-press, gravure, off-set, flexographic, pad, relief, intaglio, thermal and digital printing, wash coating, flow coating, flood coating, draw down coating, knife or blade coating, slot dye and/or curtain coating. Either manual or automatic methods can be used.

The curing step is preferably conducted at a temperature of -20 to 250 °C, preferably from -10 to 60 °C, particularly preferred 0 to 40 °C. The curing step is preferably conducted for a time of 1 to 2880 min., particularly preferred 2 to 1000 min. An ordinary person skilled in the art will select the curing temperature and/or curing time according to the chemistry of component (B).

The coating, i.e. the coating composition applied to the substrate, may have a thickness in the range of 0.01 to 50000 $\mu$m, preferably in the range of 10 to 25000 $\mu$m, more preferably in the range of 30 to 20000 $\mu$m, most preferably in

the range of 50 to 10000 μm.

Examples:

The present invention will be further described with reference to the following examples without wishing to be limited by them.

Part I: Polyoxazolidinone prepolymers:

*Epoxide compound (A1)*

A1: Araldite® DY-D/CH: Butanediol diglycidyl ether (BDDE), EEW 118-125 g/eq; was obtained from HUNTSMAN Advanced Materials (Deutschland) GmbH, Germany. Since Araldite® DY-D/CH provides a significant amount of compounds which are not the ideal structure (BDDE), a correction factor *f* for the calculation of the effective molar amount of epoxy groups was calculated on the basis of the following formula:

$$f(correction) = \frac{Mw\,(BDDE)(Ideal\,structure)}{EEW * Functionality} = \frac{202.25}{121 * 2} = 0.835$$

*Diisocyanate compound (A2)*

| A2-I: | Methylene diphenyl diisocyanate (MDI 1806), purity >99 %, Covestro AG, Germany. |
| A2-II: | Dicyclohexylmethane diisocyanate (Desmodur W, H12MDI), purity >99 %, Covestro AG, Germany. |
| A2-III: | Isophorone diisocyanate (Desmodur I, IPDI), purity >99 %, Covestro AG, Germany. |

*Catalyst (A3)*

Ph$_4$PBr    Tetraphenylphosphonium bromide, 97 % was obtained from Sigma Aldrich, Germany

A1, A2 and A3 were used as received without further purification

*Addition Protocols*

Semi-batch Protocol: The catalyst (A3) and diepoxide (A1) are provided in a glass flask and heated to 185 °C. The diisocyanate compound is added to the reactor containing the catalyst (A3) dissolved in the diepoxide compound while the mixture is continuously stirred.

*Characterization of polyoxazolidinone prepolymers*

IR

IR analyses were performed on a Bruker ALPHA-P IR spectrometer equipped with a diamond probe head. The software OPUS 6.5 was used for data treatment. A background spectrum was recorded against ambient air. Thereafter, a small sample of the polyoxazolidinone prepolymer (2 mg) was applied to the diamond probe and the IR spectrum recorded averaging over 24 spectra obtained in the range of 4000 to 400 cm$^{-1}$ with a resolution of 4 cm$^{-1}$.

Epoxy Equivalent Weight (EEW)

The epoxy equivalent weight was measured with a Metrohm 888 Titrando using a potentiometric hydrochloric acid titration. The epoxy sample was added to a 250 mL beaker and then mixed with tetrabutylammonium bromide (TBAB) in glacial acetic acid (64.5 g/L). Then the solution was titrated with a peracetic acid (0.1 mol/L) until after the equivalent point.

GPC

GPC measurements were performed at 40 °C in Dimethylacetamide (DMAc, flow rate of 1.0 mL min$^{-1}$). The column set consisted of 3 consecutive columns (PSS SDV, 5 $\mu$m, 8x50 mm precolumn, 2 PSS SDV linear S, 5 $\mu$m, 8x300 mm). Samples (concentration 2-3 g L$^{-1}$, injection volume 20 $\mu$L) were injected employing an Agilent technologies 1200 series auto sampler. An RID detector of the Agilent 1200 series was used to follow the concentration at the exit of the column. Raw data were processed using the PSS WinGPC Unity software package. Polystyrene of known molecular weight was used as reference to calculate the molecular weight distribution (PSS ReadyCal Kit in an area of 266 Da to 66.000 Da was used). The number average molecular weight measured by GPC is denominated as $M_n$ (GPC) in the examples.

Viscosity Measurements:

The viscosity values were determined via a cone/plate rheometer from Anton Paar MCR 302. A ramp of shear rates reaching from 10 - 600 1/min was used to determine the viscosity of the products. The viscosity is given in the unit mPa s, following the procedure according to DIN EN ISO 3219/A.3.

Reactor

Under a continuous flow of argon, the reactions were performed in a 250 ml three-neck round-bottom flask. A syringe pump (KD Scientific Inc.) was connected to the flask to add the diisocyanate compound to the catalyst (A3) dissolved in the diepoxide compound.

*Example 1: Synthesis of epoxy-terminated polyoxazolidinone-based prepolymers with* Araldite® *DY-D/CH as compound (A1) and with MDI 1806 as compound (A2-I) using* Ph$_4$PBr *as compound (A3) according to the Semi-batch Protocol with molar ratio of epoxy groups to isocyanate groups of 3.5:1.*

A reactor as previously described was charged with Ph$_4$PBr (0.47 g, 1.12 mmol) and Araldite® DY/D-CH (113.26 g, 0.56 mol BDDE). The reactor was closed an inertized with argon. The mixture was stirred (200-300 rpm) and heated to 185 °C. After 30 minutes at this temperature, MDI 1806 (40.04 g, 0.16 mol) as compound (A2) was added at a rate of 0.74 mL/min. After 2 h, the hot reaction mixture was drained and allowed to cool to room temperature.

The completion of the reaction was confirmed by the absence of the isocyanate band (2260 cm$^{-1}$) in the IR spectrum from the reaction mixture.

In the IR spectrum the characteristic signal for the oxazolidinone carbonyl group was observed at 1749 cm$^{-1}$.

In the IR spectrum the characteristic signal for isocyanurate groups was not observed.

The EEW was determined to be 248 g/eq.

The analysis of the molecular weight with GPC showed an average molecular weight of 720 g·mol$^{-1}$ and a Polydispersity Index of 2.96.

The viscosity of the product was determined to be 4681 mPa·s.

*Example 2: Synthesis of epoxy-terminated polyoxazolidinone-based prepolymers with Araldite*® *DY-D/CH as compound (A1) and with MDI 1806 as compound (A2-I) using* Ph$_4$PBr *as compound (A3) according to the Semi-batch Protocol with molar ratio of epoxy groups to isocyanate groups of 3.8:1.*

A reactor as previously described was charged with Ph$_4$PBr (0.47 g, 1.12 mmol) and Araldite® DY/D-CH (122.97 g, 0.61 mol BDDE). The reactor was closed an inertized with argon. The mixture was stirred (200-300 rpm) and heated to 185 °C. After 30 minutes at this temperature, MDI 1806 (40.04 g, 0.16 mol) as compound (A2) was added at a rate of 0.74 mL/min. After 2 h, the hot reaction mixture was drained and allowed to cool to room temperature.

The completion of the reaction was confirmed by the absence of the isocyanate band (2260 cm$^{-1}$) in the IR spectrum from the reaction mixture.

In the IR spectrum the characteristic signal for the oxazolidinone carbonyl group was observed at 1749 cm$^{-1}$.

In the IR spectrum the characteristic signal for isocyanurate groups was not observed.

The EEW was determined to be 227 g/eq.

The analysis of the molecular weight with GPC showed an average molecular weight of 660 g·mol$^{-1}$ and a

Polydispersity Index of 3.06.

The viscosity of the product was determined to be 2647 mPa·s.

*Example 3: Synthesis of epoxy-terminated polyoxazolidinone-based prepolymers with Araldite® DY-D/CH as compound (A1) and with MDI 1806 as compound (A2-I) using Ph$_4$PBr as compound (A3) according to the Semi-batch Protocol with molar ratio of epoxy groups to isocyanate groups of 4:1.*

A reactor as previously described was charged with Ph$_4$PBr (0.47 g, 1.12 mmol) and Araldite® DY/D-CH (129.44 g, 0.64 mol BDDE). The reactor was closed an inertized with argon. The mixture was stirred (200-300 rpm) and heated to 185 °C. After 30 minutes at this temperature, MDI 1806 (40.04 g, 0.16 mol) as compound (A2) was added at a rate of 0.74 mL/min. After 2 h, the hot reaction mixture was drained and allowed to cool to room temperature.

The completion of the reaction was confirmed by the absence of the isocyanate band (2260 cm$^{-1}$) in the IR spectrum from the reaction mixture.

In the IR spectrum the characteristic signal for the oxazolidinone carbonyl group was observed at 1749 cm$^{-1}$.

In the IR spectrum the characteristic signal for isocyanurate groups was not observed.

The EEW was determined to be 176 g/eq.

The analysis of the molecular weight with GPC showed an average molecular weight of 640 g·mol$^{-1}$ and a Polydispersity Index of 3.93.

The viscosity of the product was determined to be 1708 mPa·s.

*Example 4: Synthesis of epoxy-terminated polyoxazolidinone-based prepolymers with Araldite® DY-D/CH as compound (A1) and with MDI 1806 as compound (A2-I) using Ph$_4$PBr as compound (A3) according to the Semi-batch Protocol with molar ratio of epoxy groups to isocyanate groups of 4.5:1.*

A reactor as previously described was charged with Ph$_4$PBr (0.47 g, 1.12 mmol) and Araldite® DY/D-CH (145.62 g, 0.72 mol BDDE). The reactor was closed an inertized with argon. The mixture was stirred (200-300 rpm) and heated to 185 °C. After 30 minutes at this temperature, MDI 1806 (40.04 g, 0.16 mol) as compound (A2) was added at a rate of 0.74 mL/min. After 2 h, the hot reaction mixture was drained and allowed to cool to room temperature.

The completion of the reaction was confirmed by the absence of the isocyanate band (2260 cm$^{-1}$) in the IR spectrum from the reaction mixture.

In the IR spectrum the characteristic signal for the oxazolidinone carbonyl group was observed at 1749 cm$^{-1}$.

In the IR spectrum the characteristic signal for isocyanurate groups was not observed.

The EEW was determined to be 190 g/eq.

The analysis of the molecular weight with GPC showed an average molecular weight of 570 g·mol$^{-1}$ and a Polydispersity Index of 3.72.

The viscosity of the product was determined to be 1057 mPa·s.

*Example 5: Synthesis of epoxy-terminated polyoxazolidinone-based prepolymers with Araldite® DY-D/CH as compound (A1) and with Desmodur W as compound (A2-II) using Ph$_4$PBr as compound (A3) according to the Semi-batch Protocol with molar ratio of epoxy groups to isocyanate groups of 3.5:1.*

A reactor as previously described was charged with Ph$_4$PBr (0.47 g, 1.12 mmol) and Araldite® DY/D-CH (113.26 g, 0.56 mol BDDE). The reactor was closed an inertized with argon. The mixture was stirred (200-300 rpm) and heated to 185 °C. After 30 minutes at this temperature, Desmodur W (41.98 g, 0.16 mol) as compound (A2) was added at a rate of 0.88 mL/min. After 2 h, the hot reaction mixture was drained and allowed to cool to room temperature.

The completion of the reaction was confirmed by the absence of the isocyanate band (2260 cm$^{-1}$) in the IR spectrum from the reaction mixture.

In the IR spectrum the characteristic signal for the oxazolidinone carbonyl group was observed at 1749 cm$^{-1}$.

In the IR spectrum the characteristic signal for isocyanurate groups was not observed.

The EEW was determined to be 329 g/eq.

The analysis of the molecular weight with GPC showed an average molecular weight of 570 g·mol$^{-1}$ and a Polydispersity Index of 3.58.

The viscosity of the product was determined to be 12982 mPa·s.

*Example 6: Synthesis of epoxy-terminated polyoxazolidinone-based prepolymers with Araldite® DY-D/CH as compound (A1) and with Desmodur W as compound (A2-II) using Ph₄PBr as compound (A3) according to the Semi-batch Protocol with molar ratio of epoxy groups to isocyanate groups of 3.8:1.*

A reactor as previously described was charged with Ph$_4$PBr (0.47 g, 1.12 mmol) and Araldite® DY/D-CH (121.35 g, 0.60 mol BDDE). The reactor was closed an inertized with argon. The mixture was stirred (200-300 rpm) and heated to 185 °C. After 30 minutes at this temperature, Desmodur W (41.98 g, 0.16 mol) as compound (A2) was added at a rate of 0.88 mL/min. After 2 h, the hot reaction mixture was drained and allowed to cool to room temperature.

The completion of the reaction was confirmed by the absence of the isocyanate band (2260 cm$^{-1}$) in the IR spectrum from the reaction mixture.

In the IR spectrum the characteristic signal for the oxazolidinone carbonyl group was observed at 1749 cm$^{-1}$.

In the IR spectrum the characteristic signal for isocyanurate groups was not observed.

The EEW was determined to be 323 g/eq.

The analysis of the molecular weight with GPC showed an average molecular weight of 520 g·mol$^{-1}$ and a Polydispersity Index of 3.20.

The viscosity of the product was determined to be 7995 mPa·s.

*Example 7: Synthesis of epoxy-terminated polyoxazolidinone-based prepolymers with Araldite® DY-D/CH as compound (A1) and with Desmodur W as compound (A2-II) using Ph₄PBr as compound (A3) according to the Semi-batch Protocol with molar ratio of epoxy groups to isocyanate groups of 4:1.*

A reactor as previously described was charged with Ph$_4$PBr (0.47 g, 1.12 mmol) and Araldite® DY/D-CH (129.44 g, 0.64 mol BDDE). The reactor was closed an inertized with argon. The mixture was stirred (200-300 rpm) and heated to 185 °C. After 30 minutes at this temperature, Desmodur W (41.98 g, 0.16 mol) as compound (A2) was added at a rate of 0.88 mL/min. After 2 h, the hot reaction mixture was drained and allowed to cool to room temperature.

The completion of the reaction was confirmed by the absence of the isocyanate band (2260 cm$^{-1}$) in the IR spectrum from the reaction mixture.

In the IR spectrum the characteristic signal for the oxazolidinone carbonyl group was observed at 1749 cm$^{-1}$.

In the IR spectrum the characteristic signal for isocyanurate groups was not observed.

The EEW was determined to be 306 g/eq.

The analysis of the molecular weight with GPC showed an average molecular weight of 500 g·mol$^{-1}$ and a Polydispersity Index of 3.16.

The viscosity of the product was determined to be 4646 mPa·s.

*Example 8: Synthesis of epoxy-terminated polyoxazolidinone-based prepolymers with Araldite® DY-D/CH as compound (A1) and with Desmodur W as compound (A2-II) using Ph₄PBr as compound (A3) according to the Semi-batch Protocol with molar ratio of epoxy groups to isocyanate groups of 4.5:1.*

A reactor as previously described was charged with Ph$_4$PBr (0.47 g, 1.12 mmol) and Araldite® DY/D-CH (145.62 g, 0.72 mol BDDE). The reactor was closed an inertized with argon. The mixture was stirred (200-300 rpm) and heated to 185 °C. After 30 minutes at this temperature, Desmodur W (41.98 g, 0.16 mol) as compound (A2) was added at a rate of 0.88 mL/min. After 2 h, the hot reaction mixture was drained and allowed to cool to room temperature.

The completion of the reaction was confirmed by the absence of the isocyanate band (2260 cm$^{-1}$) in the IR spectrum from the reaction mixture.

In the IR spectrum the characteristic signal for the oxazolidinone carbonyl group was observed at 1749 cm$^{-1}$.

In the IR spectrum the characteristic signal for isocyanurate groups was not observed.

The EEW was determined to be 261 g/eq.

The analysis of the molecular weight with GPC showed an average molecular weight of 460 g·mol$^{-1}$ and a Polydispersity Index of 4.30.

The viscosity of the product was determined to be 2201 mPa·s.

*Example 9: Synthesis of epoxy-terminated polyoxazolidinone-based prepolymers with Araldite® DY-D/CH as compound (A1) and with Desmodur I as compound (A2-III) using Ph₄PBr as compound (A3) according to the Semi-batch Protocol with molar ratio of epoxy groups to isocyanate groups of 3.5:1.*

A reactor as previously described was charged with Ph$_4$PBr (0.47 g, 1.12 mmol) and Araldite® DY/D-CH (113.26 g, 0.56 mol BDDE). The reactor was closed an inertized with argon. The mixture was stirred (200-300 rpm) and heated to 185 °C. After 30 minutes at this temperature, Desmodur I (35.57 g, 0.16 mol) as compound (A2) was added at a rate of 0.79 mL/min. After 2 h, the hot reaction mixture was drained and allowed to cool to room temperature.

The completion of the reaction was confirmed by the absence of the isocyanate band (2260 cm$^{-1}$) in the IR spectrum from the reaction mixture.

In the IR spectrum the characteristic signal for the oxazolidinone carbonyl group was observed at 1749 cm$^{-1}$.

In the IR spectrum the characteristic signal for isocyanurate groups was not observed.

The EEW was determined to be 219 g/eq.

The analysis of the molecular weight with GPC showed an average molecular weight of 470 g·mol$^{-1}$ and a Polydispersity Index of 9.78.

The viscosity of the product was determined to be 4381 mPa·s.

*Example 10: Synthesis of epoxy-terminated polyoxazolidinone-based prepolymers with Araldite® DY-D/CH as compound (A1) and with Desmodur I as compound (A2-III) using Ph$_4$PBr as compound (A3) according to the Semi-batch Protocol with molar ratio of epoxy groups to isocyanate groups of 3.8:1.*

A reactor as previously described was charged with Ph$_4$PBr (0.47 g, 1.12 mmol) and Araldite® DY/D-CH (121.35 g, 0.60 mol BDDE). The reactor was closed an inertized with argon. The mixture was stirred (200-300 rpm) and heated to 185 °C. After 30 minutes at this temperature, Desmodur I (35.57 g, 0.16 mol) as compound (A2) was added at a rate of 0.79 mL/min. After 2 h, the hot reaction mixture was drained and allowed to cool to room temperature.

The completion of the reaction was confirmed by the absence of the isocyanate band (2260 cm$^{-1}$) in the IR spectrum from the reaction mixture.

In the IR spectrum the characteristic signal for the oxazolidinone carbonyl group was observed at 1749 cm$^{-1}$.

In the IR spectrum the characteristic signal for isocyanurate groups was not observed.

The EEW was determined to be 204 g/eq.

The analysis of the molecular weight with GPC showed an average molecular weight of 470 g·mol$^{-1}$ and a Polydispersity Index of 4.06.

The viscosity of the product was determined to be 2457 mPa·s.

*Example 11: Synthesis of epoxy-terminated polyoxazolidinone-based prepolymers with Araldite® DY-D/CH as compound (A1) and with Desmodur I as compound (A2-III) using Ph$_4$PBr as compound (A3) according to the Semi-batch Protocol with molar ratio of epoxy groups to isocyanate groups of 4:1.*

A reactor as previously described was charged with Ph$_4$PBr (0.47 g, 1.12 mmol) and Araldite® DY/D-CH (129.44 g, 0.64 mol BDDE). The reactor was closed an inertized with argon. The mixture was stirred (200-300 rpm) and heated to 185 °C. After 30 minutes at this temperature, Desmodur I (35.57 g, 0.16 mol) as compound (A2) was added at a rate of 0.79 mL/min. After 2 h, the hot reaction mixture was drained and allowed to cool to room temperature.

The completion of the reaction was confirmed by the absence of the isocyanate band (2260 cm$^{-1}$) in the IR spectrum from the reaction mixture.

In the IR spectrum the characteristic signal for the oxazolidinone carbonyl group was observed at 1749 cm$^{-1}$.

In the IR spectrum the characteristic signal for isocyanurate groups was not observed.

The EEW was determined to be 201 g/eq.

The analysis of the molecular weight with GPC showed an average molecular weight of 420 g·mol$^{-1}$ and a Polydispersity Index of 3.92.

The viscosity of the product was determined to be 1186 mPa·s.

*Example 12: Synthesis of epoxy-terminated polyoxazolidinone-based prepolymers with Araldite® DY-D/CH as compound (A1) and with Desmodur I as compound (A2-III) using Ph$_4$PBr as compound (A3) according to the Semi-batch Protocol with molar ratio of epoxy groups to isocyanate groups of 4.5:1.*

A reactor as previously described was charged with Ph$_4$PBr (0.47 g, 1.12 mmol) and Araldite® DY/D-CH (145.62 g, 0.72 mol BDDE). The reactor was closed an inertized with argon. The mixture was stirred (200-300 rpm) and heated to 185 °C. After 30 minutes at this temperature, Desmodur I (35.57 g, 0.16 mol) as compound (A2) was added at a rate of 0.79 mL/min. After 2 h, the hot reaction mixture was drained and allowed to cool to room temperature.

The completion of the reaction was confirmed by the absence of the isocyanate band (2260 cm$^{-1}$) in the IR spectrum from the reaction mixture.

In the IR spectrum the characteristic signal for the oxazolidinone carbonyl group was observed at 1749 cm$^{-1}$.

In the IR spectrum the characteristic signal for isocyanurate groups was not observed.

The EEW was determined to be 190 g/eq.

The analysis of the molecular weight with GPC showed an average molecular weight of 370 g·mol$^{-1}$ and a

Polydispersity Index of 8.65.

The viscosity of the product was determined to be 667 mPa s.

Table 1: Comparison of the results of Examples 1 to 12:

| Example | Compound | | | Molar Ratio epoxy groups: isocyanate groups | (m(AI)+m(A2)+ m(A3)) | Reaction mode | Mn | Đ | EEW | Viscosity | Site products IR |
|---|---|---|---|---|---|---|---|---|---|---|---|
| | (A2) | (A1) | (A3) | | [wt-%] | | [g/mol] | | [g/eq] | [mPa·s] | |
| 1 | MDI | Araldite® DY-DICH | Ph$_4$PBr | 3.5:1 | 100 | Semi-batch | 720 | 2.96 | 248 | 4681 | No |
| 2 | MDI | Araldite® DY-DICH | Ph$_4$PBr | 3.8:1 | 100 | Semi-batch | 660 | 3.06 | 227 | 2647 | No |
| 3 | MDI | Araldite® DY-D/CH | Ph$_4$PBr | 4:1 | 100 | Semi-batch | 640 | 3.93 | 176 | 1708 | No |
| 4 | MDI | Araldite® DY-DICH | Ph$_4$PBr | 4.5:1 | 100 | Semi-batch | 570 | 3.72 | 190 | 1057 | No |
| 5 | DesW | Araldite® DY-DICH | Ph$_4$PBr | 3.5:1 | 100 | Semi-batch | 570 | 3.58 | 329 | 12982 | No |
| 6 | DesW | Araldite® DY-DICH | Ph$_4$PBr | 3.8:1 | 100 | Semi-batch | 520 | 3.20 | 323 | 7995 | No |
| 7 | DesW | Araldite® DY-D/CH | Ph$_4$PBr | 4:1 | 100 | Semi-batch | 500 | 3.16 | 306 | 4646 | No |
| 8 | DesW | Araldite® DY-DICH | Ph$_4$PBr | 4.5:1 | 100 | Semi-batch | 460 | 4.30 | 261 | 2201 | No |
| 9 | DesI | Araldite® DY-DICH | Ph$_4$PBr | 3.5:1 | 100 | Semi-batch | 470 | 9.78 | 219 | 4381 | No |
| 10 | DesI | Araldite® DY-DICH | Ph$_4$PBr | 3.8:1 | 100 | Semi-batch | 470 | 4.06 | 204 | 2457 | No |
| 11 | DesI | Araldite® DY-D/CH | Ph$_4$PBr | 4:1 | 100 | Semi-batch | 420 | 3.92 | 201 | 1186 | No |
| 12 | DesI | Araldite® DY-DICH | Ph$_4$PBr | 4.5:1 | 100 | Semi-batch | 370 | 8.65 | 190 | 667 | No |
| Semi-batch: The catalyst (A3) and diepoxide (A1) are provided in a glass flask and heated to 175 °C. The diisocyanate compound (A2) is added to the reactor containing the catalyst (A3) dissolved in the diepoxide compound (A1) while the mixture is continuously stirred. | | | | | | | | | | | |

Part II: Application

During the application tests the following products were used to define the (mechanical) properties:

Curing compound 1:
Epilox® - Hardener M 1189: modified polyamine adduct hardener, NH Equivalent weight: 95 g/eq; was obtained from LELTNA- Harze GmbH, Germany.

Curing compound 2:
Aradur® 2992: aliphatic polyamine hardener, NH Equivalent weight: 55 g/eq; was obtained from Huntsman Advanced Materials GmbH, Germany.

Curing Compound 3:
DMP-30: Tris(dimethylaminomethyl)phenol, Amine value: 600 to 630 mgKOH/g; was obtained from Sigma-Aldrich Chemie GmbH, Germany.

Epoxy resin compound 1:
Epilox® T-19/34-700: Low viscosity modified bisphenol A/F epoxy resin, Epoxy equivalent weight: 165-180 g/eq. was obtained from LELTNA-Harze GmbH, Germany.

Determination methods:

Pendulum damping
The pendulum damping according to König was determined to DIN EN ISO 1522:2007-04 on glass plates.

Chemical resistance

To test the coatings for solvent resistance, the solvents xylene, 1-methoxypropyl-2-acetate, ethyl acetate and acetone were placed in test tubes and provided with a cottonwool pad at the opening, thus forming a solvent-saturated atmosphere within the test tubes. The test tubes were subsequently brought with the cotton pad onto the surface of the coating, where they remained for 5 minutes. After the solvent had been wiped off, the film was examined for destruction/softening/loss of adhesion and rated (0: no change, 5: film completely dissolved). The evaluations reported are those for the four solvents in the order in each case of xylene (X), 1-methoxypropyl-2-acetate (MPA), ethyl acetate (EA) and acetone (A) in the form of four successive digits. These were determined according to DIN EN ISO 4628-1:2016-07

Different methods were employed to test the coatings resistance towards acid and base. Drops of 10 % by weight solutions of NaOH and sulfuric acid in water were deposited on the coatings and covered with a small glass vial. The solutions remained on the coatings for 24 h. After this time, fresh water was used to remove the chemical from the coatings. The panel was then dried with paper and then the panel were examined firstly for visible changes and then by using a fingernail to scratch the surface. The observations were rated as 0: no change, 1: small ring observed, 5: film completely dissolved without fingernail scratch. These were determined according to DIN EN ISO 4628-1:2016-07.

The tensile stress at break and elongation at break were determined based on DIN EN ISO 527- 2:2012-06.

The Shore A and Shore D hardness tests were carried out according to DIN 53505:2000-08.

Example 13: Mixture of Example 1 with Epilox® M-1189 (Leuna Harze) was created to test mechanical properties. In a mixing cup 100 g of example 1 was mixed with 35,5 grams Epilox® M-1189 (Leuna Harze). After mixing, the samples were cured for 3 days at room temperature (RT) and then cured at 50 °C for three more days. Then, after cooling down for at least one day the tensile strength, elongation and Shore A + shore D were measured.

Example 14: Mixture of Example 1 with Epilox® M-1189 (Leuna Harze) was created to test mechanical properties. In a mixing cup 100 g of example 2 was mixed with 38,5 g Epilox® M-1189 (Leuna Harze). After mixing, the samples were cured for 3 days at room temperature (RT) and then cured at 50 °C for three more days. Then, after cooling down for at least one day the tensile strength, elongation and Shore A + shore D were measured.

Example 15: Mixture of Example 1 with Epilox® M-1189 (Leuna Harze) was created to test mechanical properties. In a mixing cup 100 g of example 3 was mixed with 43,4 g Epilox® M-1189 (Leuna Harze). After mixing, the samples were cured for 3 days at room temperature (RT) and then cured at 50 °C for three more days. Then, after cooling down for at least one day the tensile strength, elongation and Shore A + shore D were measured.

Example 16: Mixture of Example 1 with Epilox® M-1189 (Leuna Harze) was created to test mechanical properties. In a mixing cup 100 g of example 4 was mixed with 44,8 g Epilox® M-1189 (Leuna Harze). After mixing, the samples were cured for 3 days at room temperature (RT) and then cured at 50 °C for three more days. Then, after cooling down for at least one day the tensile strength, elongation and Shore A + shore D were measured.

Example 17: Mixture of Example 8 with Epilox® M-1189 (Leuna Harze) was created to test mechanical properties. In a mixing cup 100 g of example 8 was mixed with 36,7 g Epilox® M-1189 and 4 g of EPON® DMP-30 (Westlake epoxy) to create a mixture to test mechanical properties. After mixing, the samples were cured for 3 days at room temperature (RT) and then cured at 50 °C for three more days. Then, after cooling down for at least one day the tensile strength, elongation and Shore A + shore D were measured.

Example 18: Mixture of Example 9 with Epilox® M-1189 (Leuna Harze) was created to test mechanical properties. In a mixing cup 100 g of example 9 was mixed with 43,3 g Epilox® M-1189 and 4,7 g of EPON® DMP-30 (Westlake epoxy) to create a mixture to test mechanical properties. After mixing, the samples were cured for 3 days at room temperature (RT) and then cured at 50 °C for three more days. Then, after cooling down for at least one day the tensile strength, elongation and Shore A + shore D were measured.

The results of Examples 13 to 18 are shown in Table 2:

Table 2

| | BDDE/MDI [eq./eq.] | Example 13 | Example 14 | Example 15 | Example 16 | Example 17 | Example 18 |
|---|---|---|---|---|---|---|---|
| | | g | g | g | g | g | g |
| Example 1 | 1:3,5 | 100 | | | | | |
| Example 2 | 1:3,8 | | 100 | | | | |
| Example 3 | 1:4 | | | 100 | | | |
| Example 4 | 1:4,5 | | | | 100 | | |
| Example 8 | 1:4,5 | | | | | 100 | |
| Example 9 | 01:03,5 | | | | | | 100.00 |
| Epilox® M-1189 | | 35.50 | 38.50 | 43,4 | 44,8 | 36,7 | 43.30 |
| EPON® DMP-30 | | | | | | 4 | 4.70 |
| Tensile strength at break (N/mm$^2$) | | 3,9 | 3,3 | 3,8 | 3,8 | 5,75 | 12,1 |
| Elongation at break (%) | | 50,7 | 44,3 | 37,7 | 40,4 | 55,8 | 28,9 |
| Shore hardness | Shore A | 77 | 75 | 80 | 76 | 75 | 93 |
| | Shore D | 29 | 22 | 25 | 24 | 23 | 55 |
| Tear strength (N/mm) | | 9,6 | 6,6 | 4,3 | 3,8 | -- | -- |
| Tested after curing: 1 d at RT and 3 d 50 °C | | | | | | | |
| Wet film thickness (µm) | | 120 | 120 | 120 | 120 | 120 | 120 |
| König hardness | tested on glass | 19 | 28 | 21 | 17 | 44 | 93 |
| Chemical resistance: | | | | | | | |
| Xylene/MPA/Ethylacetate/Acetone | tested on coil | 0/0/0/1 | 0101010 | 0/0/0/1 | 0101010 | 1/0/0/1 | 0/0/0/1 |
| 10% NaOH (Sodium hydroxide) | tested on coil | 2 | 2 | 1 | 2 | 2 | 4 |
| 10% H$_2$SO$_4$ (Sulphuric acid) | tested on coil | 4 | 4 | 5 | 5 | 5 | 5 |
| Tested after curing: 7 d at RT and 3 d 50 °C; 0 = excellent to 5 = very poor | | | | | | | |

EP 4 574 860 A1

Example 19: Mixture of Example 1 with Epilox® M-1189 (Leuna Harze) was created to improve mechanical properties. In a mixing cup 75 g of example 1 was mixed with 29,3 g Epilox® M-1189 and 5 g of Epilox® T-19/34-700 (Leuna Harze) to create a mixture with improved mechanical properties compared with example 1. After mixing, the samples were cured for 3 days at room temperature (RT) and then cured at 50 °C for three more days. Then, after cooling down for at least one day the tensile strength, elongation and Shore A + shore D were measured.

Example 20: Mixture of Example 1 with Epilox® M-1189 (Leuna Harze) was created to improve mechanical properties. In a mixing cup 75 g of example 1 was mixed with 31,9 g Epilox® M-1189 and 10 g of Epilox® T-19/34-700 (Leuna Harze) to create a mixture with improved mechanical properties compared with example 1. After mixing, the samples were cured for 3 days at room temperature (RT) and then cured at 50 °C for three more days. Then, after cooling down for at least one day the tensile strength, elongation and Shore A + shore D were measured.

Example 21: Mixture of Example 1 with Epilox® M-1189 (Leuna Harze) was created to improve mechanical properties. In a mixing cup 75 g of example 1 was mixed with 37,2 g Epilox® M-1189 and 20 g of Epilox® T-19/34-700 (Leuna Harze) to create a mixture with improved mechanical properties compared with example 1. After mixing, the samples were cured for 3 days at room temperature (RT) and then cured at 50 °C for three more days. Then, after cooling down for at least one day the tensile strength, elongation and Shore A + shore D were measured.

Example 22: Mixture of Example 1 with Epilox® M-1189 (Leuna Harze) was created to improve mechanical properties. In a mixing cup 75 g of example 1 was mixed with 47,7 g Epilox® M-1189 and 40 g of Epilox® T-19/34-700 (Leuna Harze) to create a mixture with improved mechanical properties compared with example 1. After mixing, the samples were cured for 3 days at room temperature (RT) and then cured at 50 °C for three more days. Then, after cooling down for at least one day the tensile strength, elongation and Shore A + shore D were measured.

Example 23: Mixture of Example 1 with Epilox® M-1189 (Leuna Harze) was created to improve mechanical properties. In a mixing cup 75 g of example 1 was mixed with 53,1 g Epilox® M-1189 and 50 g of Epilox® T-19/34-700 (Leuna Harze) to create a mixture with improved mechanical properties compared with example 1. After mixing, the samples were cured for 3 days at room temperature (RT) and then cured at 50 °C for three more days. Then, after cooling down for at least one day the tensile strength, elongation and Shore A + shore D were measured.

Example 24: Mixture of Epilox® T-19/34-700 (Leuna Harze) with Epilox® M-1189 (Leuna Harze) was created as comparison for example 13 until example 17. In a mixing cup 64,5 g of Epilox® T-19/34-700 (Leuna Harze) was mixed with 35,5 g Epilox® M-1189 to create a mixture which was used as comparison for example 13 until example 17. After mixing, the samples were cured for 3 days at room temperature (RT) and then cured at 50°C for three more days. Then, after cooling down for at least one day the tensile strength, elongation and Shore A + shore D were measured.

Example 25: Mixture of Example 1 with Aradur® 2992 (Huntsman) was created to improve mechanical properties. In a mixing cup 82,9 g of example 1 was mixed with 17,1 g Aradur® 2992 which was used as comparison for example 13 until example 17. After mixing, the samples were cured for 3 days at room temperature (RT) and then cured at 50 °C for three more days. Then, after cooling down for at least one day the tensile strength, elongation and Shore A + shore D were measured.

Example 26: Mixture of Epilox® T-19/34-700 (Leuna Harze) with Aradur® 2992 (Huntsman) was created as comparison for example 13 until example 17. In a mixing cup 75,9 g of Epilox® T-19/34-700 (Leuna Harze) was mixed with 24,1 grams Aradur® 2992 to create a mixture which was used as comparison for example 13 until example 17. After mixing, the samples were cured for 3 days at room temperature (RT) and then cured at 50 °C for three more days. Then, after cooling down for at least one day the tensile strength, elongation and Shore A + shore D were measured.

The results of Examples 13 to 26 are shown in Table 3:

Table 3

| | | Example 19 | Example 20 | Example 21 | Example 22 | Example 23 | Example 24 |
|---|---|---|---|---|---|---|---|
| | BDDE/MDI [eq./eq.] | g | g | g | g | g | g |
| Example 1 | 1:3,5 | 75 | 75 | 75 | 75 | 75 | -- |
| Epilox® M -1189 | | 29,3 | 31,9 | 37,2 | 47,7 | 53,1 | 35,5 |
| Aradur® 2992 Epilox® T-19/34-700 | | 5 | 10 | 20 | 40 | 50 | 64,5 |

(continued)

| | | | | | | | |
|---|---|---|---|---|---|---|---|
| Tensile strength at break [N/mm$^2$] | | 4.5 | 5.7 | 7.1 | 11.1 | 14.0 | 54,2 |
| Elongation at break [%] | | 53.5 | 51.2 | 46.8 | 33.9 | 27.3 | 2,8 |
| Shore hardness | Shore A | 82 | 86 | 92 | 98 | 96 | 99 |
| | Shore D | 22 | 33 | 37 | 50 | 58 | 78 |

Tested after curing: 1 d at RT and 3 d 50 °C

| | | | **Example 25** | **Example 26** |
|---|---|---|---|---|
| | | BDDE/MDI [eq./eq.] | g | g |
| | Example 1 Epilox® M -1189 | 1:3,5 | 82,9 | |
| | Aradur® 2992 | | 17,1 | 24,1 |
| | Epilox® T-19/34-700 | | | 75,9 |
| | Tensile strength at break [N/mm$^2$] | | 18,2 | sticky |
| | Elongation at break [%] | | 23,7 | sticky |
| | Shore hardness | Shore A | 94 | 98 |
| | | Shore D | 59 | 82 |

Tested after curing: 1 d at RT and 3 d 50 °C

## Claims

1. Use of a solvent-free composition C, comprising

(A) at least one epoxy-group terminated polyoxazolidinone, derived from a process P comprising the copolymerization of

(A1) at least one aliphatic polyepoxide compound with
(A2) at least one cycloaliphatic and/or at least one aromatic and/or at least one araliphatic polyisocyanate compound, which optionally is blocked with at least one blocking agent,
preferably in the presence of
(A3) at least one catalyst,
at a molar ratio of the epoxy groups of the polyepoxide component (A1) to the isocyanate groups of the polyisocyanate component (A2) of ≥ 2:1 to ≤ 25:1,

(B) at least one compound having at least one group that is reactive towards terminal epoxy-groups,
(C) optionally at least one catalyst and
(D) optionally at least one additive,

for producing adhesives, sealing compounds, potting compounds, composites, such as fiber composite materials, or moldings, or for producing coatings on mineral, metallic or plastic substrates.

2. Use of a solvent-free composition C according to claim 1, wherein the molar ratio of the epoxy groups of the polyepoxide component (A1) to the isocyanate groups of the polyisocyanate component (A2) is $\geq$ 2,5:1 to $\leq$ 25:1, preferably $\geq$ 3:1 to $\leq$ 25:1, more preferably $\geq$ 3,5:1 to $\leq$ 25:1, further preferred $\geq$ 3,5:1 to $\leq$ 10:1, more preferred $\geq$ 3,5:1 to $\leq$ 5:1, even more preferred $\geq$ 3,5:1 to $\leq$ 4,5:1.

3. Use of a solvent-free composition C according to claim 1 or 2, wherein component (B) is selected from the group consisting of dicyandiamides, substituted guanidines, phenolic compounds, amines, benzoxazines, anhydrides, amido amines, polyamides, polyamines, polyesters, polyisocyanates, polymercaptans, urea formaldehyde, melamine formaldehyde resins and mixtures thereof.

4. Use of a solvent-free composition C according to any of claims 1 to 3, wherein the at least one epoxy-group terminated polyoxazolidinone (A) has an epoxy equivalent weight (EEW) of 100 to 5000 g/eq, preferably of 120 to 2000 g/eq, more preferred of 150 to 800 g/eq, wherein the epoxy equivalent weight was measured with a Metrohm 888 Titrando system.

5. Use of a solvent-free composition C according to any of claims 1 to 4, wherein the at least one epoxy-group terminated polyoxazolidinone (A) in general has an oxazolidinone weight content of 5 to 50 % by weight, preferably 7 to 45 % by weight, particularly preferably 10 to 40 % by weight.

6. Use of a solvent-free composition C according to any of claims 1 to 5, wherein the viscosity of the solvent-free composition C is $\leq$ 15000 mPas, preferably $\leq$ 10000 mPas more preferably $\leq$ 7000 mPas, determined according to DIN EWN ISO 3219/A.3.

7. Coatings on mineral, metallic or plastic substrates, adhesives, sealing compounds, potting compounds, composites, such as fiber composite materials, and moldings, obtainable by the use of a solvent-free composition C, according to any of claims 1 to 6.

8. Use of a solvent-free composition C according to any of claims 1 to 6, for producing adhesives, sealing compounds or potting compounds on mineral, metallic or plastic substrates.

9. Adhesives, sealing compounds or potting compounds on mineral, metallic or plastic substrates obtainable by the use according to claim 8.

10. Use of coatings according to claim 7 as anti-corrosion coatings in hydraulic steel engineering, in shipbuilding, in chalybeate water construction and for pipelines, as aesthetic or protective coatings, e.g. as primers, for floors, walls and roofs.

11. Use of sealing compounds or potting compounds according to claim 7 or 9 as sealing compounds or potting compounds for floors, walls and roofs, as mortars or wood repair compounds, especially such that cure at room temperature.

Europäisches
Patentamt
European
Patent Office
Office européen
des brevets

# EUROPEAN SEARCH REPORT

**Application Number**

EP 23 21 8179

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 194 475 A1 (COVESTRO DEUTSCHLAND AG [DE]) 14 June 2023 (2023-06-14) * paragraphs [0111], [0113]; claims 1,3,5,13 * | 1-11 | INV. C08G18/00 C08G18/75 C08G18/76 C09D175/04 |
| X | US 2023/257512 A1 (MOVAHHED SOHAJL [DE] ET AL) 17 August 2023 (2023-08-17) * paragraphs [0118], [0122]; claims 1,9,10 * | 1-11 | |

TECHNICAL FIELDS
SEARCHED      (IPC)

C08G
C09D

The present search report has been drawn up for all claims

| Place of search | Date of completion of the search | Examiner |
|---|---|---|
| Munich | 3 June 2024 | Buestrich, Ralf |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

                        

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 21 8179

This annex lists the patent family members relating to the patent documents cited in the above-mentioned European search report.
The members are as contained in the European Patent Office EDP file on
The European Patent Office is in no way liable for these particulars which are merely given for the purpose of information.

03-06-2024

| Patent document cited in search report | | Publication date | Patent family member(s) | | Publication date |
|---|---|---|---|---|---|
| EP 4194475 | A1 | 14-06-2023 | EP | 4194475 A1 | 14-06-2023 |
| | | | WO | 2023110515 A1 | 22-06-2023 |
| US 2023257512 | A1 | 17-08-2023 | CN | 115989262 A | 18-04-2023 |
| | | | EP | 4200352 A1 | 28-06-2023 |
| | | | US | 2023257512 A1 | 17-08-2023 |
| | | | WO | 2022043125 A1 | 03-03-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2022122606 A1
- EP 23164709
- DE 1670666 A
- DE 1954093 A
- DE 2414413 A
- DE 2452532 A
- DE 2641380 A
- DE 3700209 A
- DE 3900053 A
- DE 3928503 A
- EP 0336205 A
- EP 0339396 A
- EP 0798299 A
- DE 870400 A
- DE 953012 A
- DE 1090196 A
- EP 0546399 A
- CN 105218780
- CN 103881050
- CN 101717571
- US 3183112 A
- EP 0416338 A
- EP 0751163 A
- EP 1378529 A
- EP 1378530 A
- EP 2174967 A
- JP 63260915 B
- JP 56059828 B
- WO 2021204741 A1
- DE 19948004 A1
- DE 1991498 A1
- DE 10043405 C1

### Non-patent literature cited in the description

- *J. Prakt. Chem.*, 1994, vol. 336, 185-200
- Ullmann's Encyklopädie der technischen Chemie. Verlag Chemie, 1976, vol. 12, 539-545
- **KIRK-OTHMER**. Encyclopedia of Chemical Technology. John Wiley & Sons, 1980, vol. 12, 852-869
- Encyclopedia of Polymer Science and Engineering. John Wiley & Sons, 1987, vol. 7, 758-782